# FASCICULE DE BREVET EUROPEEN

(11) **EP 4 067 895 B1**
(45) Date de publication et mention de la délivrance du brevet: **17.05.2023**
(21) Numéro de dépôt: 22163425.6
(22) Date de dépôt: 22.03.2022
(51) Int. Cl.: G01N 29/04, G01N 29/30, G01N 29/46

(54) **PROCÉDÉ DE VÉRIFICATION D'UNE SONDE ULTRASONS DANS LE CADRE D'UNE INSPECTION STRUCTURELLE D'UNE PIÈCE**
VERFAHREN ZUR PRÜFUNG EINER ULTRASCHALLSONDE IM RAHMEN EINER STRUKTURPRÜFUNG EINES WERKSTÜCKS
METHOD FOR VERIFYING AN ULTRASONIC PROBE IN THE CONTEXT OF A STRUCTURAL INSPECTION OF A PART

(30) Priorité: 01.04.2021 FR 2103392
(43) Date de publication de la demande: 05.10.2022
(73) Titulaire: AIRBUS OPERATIONS (S.A.S.), 31060 Toulouse (FR)
(72) Inventeur: RAUTUREAU, Aurélien, 31060 TOULOUSE (FR); JARRY, Bertrand, 31060 TOULOUSE (FR); DOMINGUEZ, Nicolas, 31060 TOULOUSE (FR)
(74) Mandataire: Jardel, Marc Henry Philippe

(56) Documents cités:
- US-A1- 2015 168 355
- US-A1- 2018 231 508

## Description

### DOMAINE TECHNIQUE

La présente invention concerne un procédé de vérification d'une sonde ultrasons dans le cadre d'une inspection structurelle d'une pièce, ainsi que d'outils d'aide à la calibration utilisés dans le cadre dudit procédé de vérification.

### ÉTAT DE LA TECHNIQUE ANTÉRIEURE

L'inspection structurelle d'une pièce s'effectue par utilisation d'un système de contrôle non destructif. Pour ce faire, plusieurs technologies sont connues comme par exemple l'utilisation d'une sonde ultrasons mono élément ou d'une sonde ultrasons multiéléments. Une telle sonde multiéléments comporte plusieurs émetteurs ultrasons et plusieurs capteurs ultrasons. Lorsque le faisceau émis par le ou les émetteurs arrive sur un bord de la pièce ou sur un défaut de la pièce tel qu'une crique, ce faisceau est réfléchi et au moins une partie du faisceau réfléchi est détectée par le ou les capteurs. La mesure de l'intervalle de temps entre l'émission du faisceau et la réception du faisceau réfléchi permet de caractériser la position du défaut dans la pièce.

Dans le cas d'une sonde ultrasons multiéléments, il est possible de choisir les sources qui vont émettre des ultrasons, afin de générer un front d'ondes qui se propage dans la direction souhaitée.

À réception des ondes ultrasonores, les différents capteurs génèrent des signaux électriques qui sont transmis à une unité de contrôle de la sonde où ils sont traités sous forme de signaux dits combinés et envoyés vers un écran pour être affichés sous forme d'une image représentative desdites ondes ou sous forme d'un spectre fréquentiel desdits signaux combinés. Les ondes ultrasonores sont ainsi captées par les capteurs et transformées par l'unité de contrôle de la sonde ultrasons multiéléments en des signaux électriques qui peuvent être à leur tour transmis et affichés sur un écran, où un technicien peut visualiser le résultat.

Lors de l'utilisation d'un tel système de contrôle, il est recommandé de calibrer la chaîne de contrôle avant d'effectuer les mesures sur la pièce afin de vérifier le bon fonctionnement de la sonde ultrasons mono élément ou multiéléments.

De manière connue, la calibration consiste à utiliser un bloc de calibration sur lequel la sonde ultrasons mono élément ou multiéléments est fixée, puis à effectuer les mesures de vérifications appropriées qui permettent de valider le bon fonctionnement de la sonde ultrasons mono élément ou multiéléments.

De plus en plus, une telle sonde ultrasons mono élément ou multiéléments est collée à demeure sur la pièce. En particulier, sur certaines pièces d'un aéronef, de telles sondes ultrasons mono élément ou multiéléments sont collées de manière définitive et ces sondes ultrasons mono élément ou multiéléments permettent le cas échéant de détecter un défaut lorsqu'il apparaît. Mais la fixation définitive de la sonde ultrasons ne permet pas l'utilisation d'un bloc de calibration pour procéder au calibrage de la sonde ultrasons et il est donc nécessaire de trouver un procédé de vérification permettant de vérifier que la calibration de la sonde ultrasons est toujours bonne même lorsque cette dernière est collée sur une pièce.

Le document US2015/168355A1 divulgue un procédé de calibration d'une sonde à ultrasons. Toutefois, ce procédé n'est pas prévu pour une sonde collée sur la pièce.

### EXPOSÉ DE L'INVENTION

Un objet de la présente invention est de proposer un procédé de vérification d'une sonde ultrasons collée sur une pièce sans qu'il soit nécessaire de séparer la sonde de la pièce.

À cet effet, est proposé un procédé de vérification d'une sonde ultrasons comprenant :
- une étape de fourniture au cours de laquelle une pièce présentant une zone à surveiller et sur laquelle la sonde est fixée, est fournie,
- une première étape de récupération au cours de laquelle un enregistrement de référence relatif à la sonde est récupéré à partir d'une mémoire où il est enregistré,
- une première étape d'activation au cours de laquelle des ondes ultrasonores sont émises par au moins un émetteur de la sonde, reçues par au moins un capteur de la sonde, et transformées en des signaux combinés par une unité de contrôle de la sonde,
- une première étape de comparaison au cours de laquelle un spectre fréquentiel des signaux ainsi combinés est comparé à un spectre fréquentiel de signaux combinés relatifs à la zone à surveiller de l'enregistrement de référence,
   dans le cas où la comparaison est positive, le procédé de vérification s'arrête,
   la comparaison étant considérée positive lorsque le spectre fréquentiel des signaux combinés de la présente mesure et le spectre fréquentiel des signaux combinés de l'enregistrement de référence diffèrent au plus de +/- X% de l'enregistrement de référence, X étant un nombre compris dans l'intervalle [2 ; 15], en particulier égal à 10,
   dans le cas où la comparaison est négative, le procédé de vérification se poursuit par :
      - une deuxième étape de récupération au cours de laquelle un outil d'aide comportant un bloc constitué d'un matériau permettant la transmission des ondes ultrasonores dans lequel est noyé un défaut connu et qui comporte une face de contact et dont les informations sont enregistrées dans l'enregistrement de référence, est récupéré,
      - une étape de mise en place au cours de laquelle la face de contact de l'outil d'aide ainsi récupéré est mise en place à un endroit précis d'établissement de l'enregistrement de référence,
      - une deuxième étape d'activation au cours de laquelle des ondes ultrasonores sont émises par l'au moins un émetteur de la sonde, reçues par l'au moins un capteur de la sonde, et transformées en des signaux combinés par l'unité de contrôle de la sonde, et
      - une deuxième étape de comparaison au cours de laquelle les signaux ainsi combinés sont comparés à des signaux combinés relatifs au défaut connu de l'enregistrement de référence, dans le cas où la comparaison est positive, le procédé de vérification se poursuit par une étape d'enregistrement au cours de laquelle les signaux ainsi combinés sont enregistrés dans l'enregistrement de référence,

la comparaison étant considérée positive lorsque les signaux combinés de la présente mesure et les signaux combinés de l'enregistrement de référence diffèrent au plus de +/- Y% de l'enregistrement de référence, Y étant un nombre compris dans l'intervalle [2 ; 15], en particulier égal à 10,
dans le cas où la comparaison est négative, le procédé de vérification se poursuit par une étape de maintenance, au cours de laquelle la sonde subit des opérations de maintenance.

Un tel procédé de vérification permet de vérifier l'état de la sonde sans qu'il soit nécessaire de la démonter.

Avantageusement, le procédé comporte une phase d'établissement d'une référence après l'installation de la sonde sur la pièce, et la phase d'établissement comprend :
- une étape de mise en place au cours de laquelle une face de contact d'un outil d'aide comportant un bloc constitué d'un matériau permettant la transmission des ondes ultrasonores dans lequel est noyé un défaut connu, est mise en place à un endroit précis sur une face de la pièce,
- une étape d'activation au cours de laquelle des ondes ultrasonores sont émises par l'au moins un émetteur de la sonde, reçues par l'au moins un capteur de la sonde, et transformées en des signaux combinés par l'unité de contrôle de la sonde, et
- une étape d'enregistrement de données, au cours de laquelle, les signaux ainsi combinés sont enregistrés sous forme d'un enregistrement de référence dans une mémoire.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue en perspective d'une pièce avec une sonde ultrasons multiéléments,
La figure 2 est une vue en perspective d'un outil d'aide à la calibration selon un premier mode de réalisation de l'invention,
La figure 3 est une vue en perspective d'un outil d'aide à la calibration selon un deuxième mode de réalisation de l'invention,
La figure 4 est une vue en coupe selon le plan IV de l'outil d'aide de la figure 3, et
La figure 5 est une vue de côté d'un outil d'aide à la calibration mis en position sur la pièce à inspecter, et
La figure 6 illustre schématiquement un exemple d'architecture matérielle d'une sonde ultrasons.

### EXPOSÉ DÉTAILLÉ DE MODES DE RÉALISATION

Bien que la description ci-dessous ait été plus particulièrement orientée vers une sonde ultrasons multiéléments, elle s'applique de la même manière à une sonde ultrasons constituée d'une seule paire émetteur/récepteur.

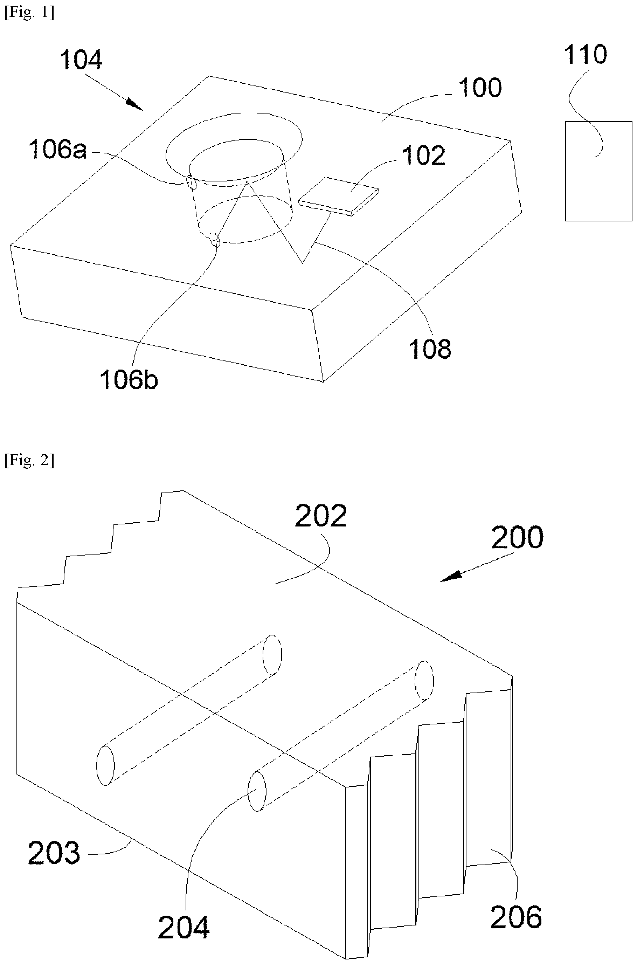

La figure 1 montre une pièce 100 contre une face de laquelle une sonde ultrasons multiéléments 102 est collée. La sonde 102 est alimentée électriquement par des conducteurs électriques non représentés et de la même manière, les données transmises par la sonde 102 par exemple à destination d'un écran 110, sont transmises par des câbles de données non représentés ou par tous moyens de transmission sans fil. Une telle sonde 102 comporte plusieurs émetteurs ultrasons et plusieurs capteurs ultrasons.

La pièce 100 qui peut être une pièce d'un aéronef, comporte une zone à surveiller 104 qui est ici un alésage autour duquel des défauts 106a-b sont susceptibles d'apparaître.

Comme dans le cas de l'état de la technique, les émetteurs de la sonde 102 émettent des ondes ultrasonores 108 qui, après réflexion, sont reçues par les capteurs de ladite sonde 102 qui les transforment en signaux électriques qui sont transmis à une unité de contrôle de la sonde 102 où ils sont traités sous forme de signaux dits combinés et sous forme de spectre fréquentiel desdits signaux combinés et transmis à l'écran 110 pour être affichés sous forme d'une image représentative desdites ondes qui est visualisée par un technicien. L'unité de contrôle est par exemple du type calculateur ou autres. Le spectre fréquentiel des signaux combinés est le résultat d'une transformée de Fourier desdits signaux combinés.

La figure 2 montre un outil 200 d'aide à la calibration de la sonde 102 selon un premier mode de réalisation.

L'outil d'aide 200 prend la forme d'un bloc 202 réalisé dans un matériau permettant la transmission des ondes ultrasonores. Ce matériau est un matériau acoustiquement peu atténuant et ayant une impédance acoustique se rapprochant de celle de l'eau et peut être par exemple du polyméthacrylate de méthyle, notamment commercialisé sous la marque Plexiglass^{®}, ou du copolymère de polystyrène réticulé, notamment commercialisé sous la marque Rexolite^{®}.

Le bloc 202 est un parallélépipède rectangle et il comporte une face de contact 203 qui est une face plane d'appui qui est placée sur la pièce 100 lors du procédé de calibration décrit ci-dessous.

À l'intérieur du bloc 202 est réalisé au moins un « défaut » connu 204 qui est ici un alésage 204 qui traverse le bloc 202. Ce défaut connu 204 est donc noyé dans un matériau permettant la transmission des ondes ultrasonores. Chaque alésage 204 présente ici son axe parallèlement à la face de contact 203. Le défaut est connu par ses dimensions, positions et orientations.

Bien sûr tous autres types de défauts connus peuvent être introduits dans le bloc 202. Il peut s'agir par exemple de trous de formes différentes, par exemple parallélépipédique, ou d'inserts introduits dans le bloc 202.

Dans le mode de réalisation présenté à la figure 2, le bloc 202 présente un dispositif de brise ondes 206 sur deux faces latérales opposées dudit bloc 202. Chaque dispositif brise ondes 206 permet d'absorber les ondes ultrasonores parasites qui pourraient être réfléchies par les faces latérales. Dans le mode de réalisation de la figure 2, chaque dispositif brise ondes 206 prend la forme d'échancrures triangulaires s'étendant perpendiculairement à la face de contact 203. Dans le mode de réalisation de la figure 2, les deux faces latérales opposées sont les faces perpendiculaires à la face de contact 203 et parallèles aux axes des alésages 204, mais il est possible de mettre des dispositifs de brise ondes sur les deux autres faces de bloc 202 adjacentes à la face de contact 203.

Afin d'effectuer plusieurs mesures, il est possible de faire glisser la face de contact 203 de l'outil d'aide 200 contre la pièce 100 afin d'effectuer une calibration dans différentes positions de l'outil d'aide 200. Ces différentes mesures sont alors enregistrées avec les positions correspondantes.

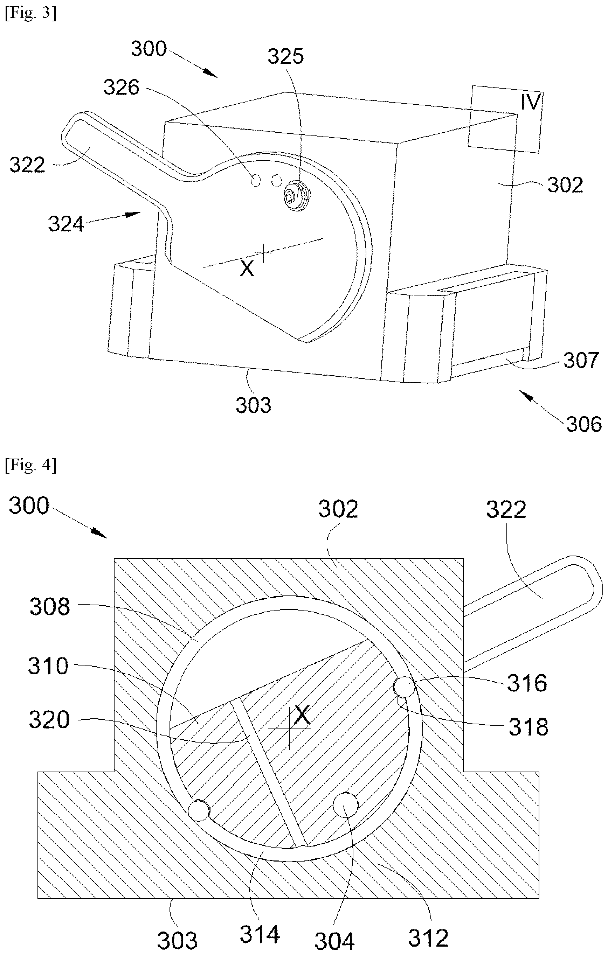

La figure 3 et la figure 4 montrent un outil d'aide 300 d'aide à la calibration de la sonde 102 selon un deuxième mode de réalisation.

L'outil d'aide 300 comporte un boîtier 302 qui comporte une face de contact 303 qui est une face plane d'appui qui est placée sur la pièce 100 lors du procédé de calibration.

Le boîtier 302 comporte une chambre 308 qui est creuse de forme cylindrique de base au moins semi-circulaire, c'est-à-dire semi-circulaire ou circulaire. La chambre 308 comporte ainsi un axe central X.

Cette chambre 308 est prévue pour recevoir un tambour 310 et pour permettre une rotation dudit tambour 310 autour de l'axe central X. Le tambour 310 présente également une forme cylindrique, au moins partiellement complémentaire de la forme cylindrique de la chambre 308. Le tambour 310 est réalisé dans un matériau permettant la transmission des ondes ultrasonores. De la même manière, au moins la partie inférieure 312 du boîtier 302, c'est-à-dire la partie entre la face de contact 303 et le tambour 310, est réalisée dans un matériau permettant la transmission des ondes ultrasonores.

De tels matériaux sont des matériaux acoustiquement peu atténuants et ayant une impédance acoustique se rapprochant de celle de l'eau et sont par exemple du polyméthacrylate de méthyle, notamment commercialisé sous la marque Plexiglass^{®}, ou du copolymère de polystyrène réticulé, notamment commercialisé sous la marque Rexolite^{®}.

À l'intérieur du tambour 310 est réalisé un « défaut » connu 304 qui est ici un alésage 304 qui traverse le tambour 310. Le défaut connu 304 est ainsi noyé dans un matériau permettant la transmission des ondes ultrasonores. L'alésage 304 présente ici son axe parallèlement à la face de contact 203 et à l'axe central X. Le défaut connu 304 est préférentiellement en partie basse du tambour 310, c'est-à-dire au plus près possible de la face de contact 303 pour éviter aux ondes ultrasonores d'avoir à traverser tout le tambour 310 pour atteindre ledit défaut connu 304. Le défaut est connu par ses dimensions, positions et orientations.

Bien sûr tous autres types de défauts connus peuvent être introduits dans le tambour 310. Il peut s'agir par exemple de trous de diamètres différents, de formes différentes, ou d'inserts introduits dans le tambour 310.

Entre le tambour 310 et le boîtier 302 et plus particulièrement la partie inférieure 312, l'outil d'aide 300 présente un interstice 314 qui reçoit un bain de couplant qui peut être par exemple un gel assurant la transmission des ondes ultrasonores à travers l'interstice 314.

Pour limiter le volume du bain de couplant à la zone inférieure du tambour 310, un joint 316 est logé dans une gorge 318 du tambour 310. Le joint 316 est ici un joint torique et la gorge 318 fait le tour du tambour 310 dans un plan parallèle à l'axe central X. Le joint 316 a ainsi une forme rectangulaire. Le joint 316 est disposé de part et d'autre du défaut connu 304 pour assurer qu'il y a toujours du couplant dans l'interstice 314 en regard du défaut connu 304.

Pour assurer le remplissage et la vidange du bain de couplant, le tambour 310 est percé d'au moins une conduite 320 dont une première extrémité débouche au niveau de l'interstice 304 au niveau du bain de couplant et dont une deuxième extrémité est prévue pour être connectée à un système de remplissage ou de vidange.

Pour faciliter le déplacement en rotation du tambour 310, l'outil d'aide 300 comporte un moyen de préhension 322, ici une poignée, solidaire du tambour 310 et accessible depuis l'extérieur du boîtier 302. À cette fin, une partie du tambour 310 se prolonge à l'extérieur du boîtier 302 pour permettre la fixation du moyen de préhension 322 à ladite partie.

Pour faciliter le blocage en position du tambour 310, l'outil d'aide 300 comporte un système de blocage 324 qui prend alternativement une position de blocage dans laquelle il bloque la rotation du tambour 310 par rapport au boîtier 302 ou une position libre dans laquelle il ne bloque pas la rotation du tambour 310 par rapport au boîtier 302 et autorise donc sa rotation. Le système de blocage 324 peut être par exemple une vis 325 qui traverse un orifice de la poignée 322 et qui se visse dans un trou taraudé 326 du boîtier 302 prévu à cet effet. Pour assurer l'arrêt du tambour 210 dans différentes positions, plusieurs trous taraudés 326 sont prévus.

Le système de blocage 324 peut prendre d'autres formes, comme par exemple une bille sur ressort implantée dans le boîtier 302 et une pluralité d'évidements répartis sur la poignée 324, où la bille peut s'arrêter successivement dans chaque évidement pour bloquer le tambour 210 dans une position particulière.

Le boîtier 302 présente un dispositif de brise ondes 306 sur deux faces latérales opposées dudit boîtier 302. Chaque dispositif brise ondes 306 permet d'absorber les ondes ultrasonores parasites qui pourraient être réfléchies par les faces latérales. Dans le mode de réalisation des figures 3 et 4, chaque dispositif brise ondes 306 prend la forme d'un racleur en caoutchouc 307 affleurant la surface de la pièce 100.

Dans le mode de réalisation des figures 3 et 4, les deux faces latérales opposées sont les faces perpendiculaires à la face de contact 303 et parallèles à l'axe central X, mais il est possible de mettre des dispositifs de brise ondes sur les deux autres faces du boîtier 302 adjacentes à la face de contact 303.

L'outil d'aide 300 permet ainsi de modifier la position du défaut 304 afin d'adapter cette position à l'environnement afin d'avoir une bonne interaction avec les ondes ultrasonores 108. Cet outil d'aide 300 remplace ainsi une pluralité d'outils d'aide avec des défauts connus qui sont fixes en position et en orientation comme l'outil d'aide 200 du premier mode de réalisation. Il est possible d'effectuer une mesure pour différentes positions angulaires du tambour 310 et de les enregistrer avec les positions angulaires correspondantes.

Ainsi d'une manière générale, chaque outil d'aide 200, 300 comporte un bloc constitué d'un matériau permettant la transmission des ondes ultrasonores dans lequel est noyé un défaut connu 204, 304. Dans le mode de réalisation de la figure 2, le bloc est le bloc 202. Dans le mode de réalisation des figures 3 et 4, le bloc est constitué par le tambour 310 et la partie inférieure 312 du boîtier 302.

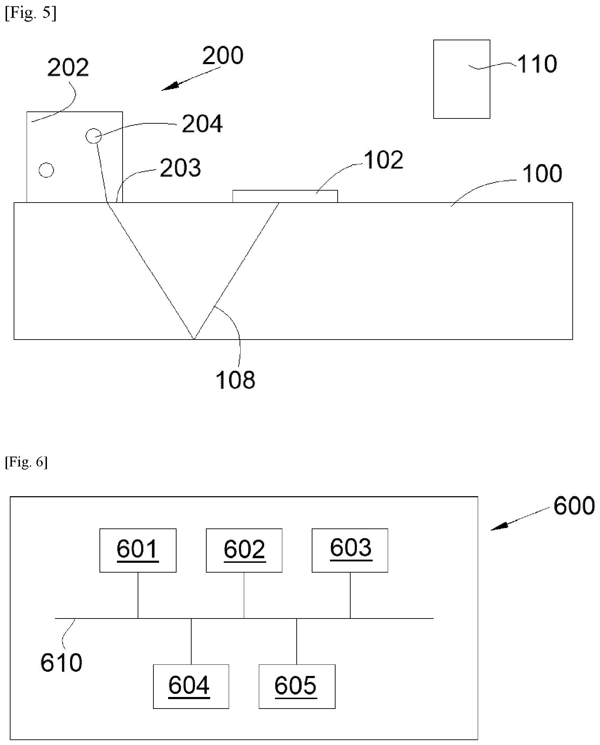

La figure 5 montre un exemple d'utilisation de l'outil d'aide 200 selon le premier mode de réalisation, mais le principe est identique avec l'outil d'aide 300 selon le deuxième mode de réalisation.

L'outil d'aide 200 est disposé sur la pièce 100 avec sa face de contact 203 contre la surface de la pièce 100 et de manière à ce que les ondes ultrasonores 108 émises par les émetteurs de la sonde 102 pénètrent dans l'outil d'aide 200 et rencontrent le défaut connu 204 à travers le matériau permettant la transmission des ondes ultrasonores.

Les ondes ultrasonores sont alors réfléchies par le défaut 204 et elles sont captées et transformées par les capteurs de la sonde 102 en des signaux électriques qui sont, à leur tour, traités par l'unité de contrôle de la sonde 102 et transmis à l'écran 110 sous la forme de signaux dits combinés ou sous forme d'un spectre fréquentiel des signaux combinés, où un technicien peut visualiser le résultat.

Préalablement à la mise en oeuvre du procédé de vérification de la sonde 102, ledit procédé de vérification comporte une phase d'établissement d'une référence après l'installation de la sonde 102 sur la pièce 100.

Dans le mode de réalisation de l'invention présenté ici et après avoir collé la sonde 102, la phase d'établissement consiste à positionner la face de contact 203, 303 d'un outil d'aide 200, 300 à un endroit précis de la pièce 100 puis à faire émettre aux émetteurs de la sonde 102 des ondes ultrasonores 108. Suite à cette émission et après réflexion, les capteurs de la sonde 102 reçoivent des ondes sonores 108, et la phase d'établissement consiste enfin à enregistrer les signaux combinés après traitement par l'unité de traitement suite à ces réceptions. Ainsi, un enregistrement de référence est établi pour la sonde 102 collée sur la pièce 100 pour un outil d'aide 200, 300 particulier et positionné à un endroit précis. Les signaux combinés peuvent également être enregistrés sous la forme de leur spectre fréquentiel.

L'enregistrement de référence inclut ainsi les signaux combinés qui sont relatifs à la zone à surveiller 104 et au défaut connu 204, 304 de l'outil d'aide 200, 300 peu après l'installation de la sonde 102 et constitue donc une base pour les vérifications ultérieures de la zone à surveiller 104. Dans un mode de réalisation, l'enregistrement de référence comprend par exemple un instantané de l'image de l'écran, sur lequel sont visibles les échos de la zone à surveiller 104 et du défaut connu 204, 304.

Dans un mode de réalisation, l'enregistrement de référence inclut également les informations concernant l'outil d'aide 200, 300 utilisé et la localisation de l'endroit précis de la mise en place de sa face de contact 203, 303 sur la pièce 100. Concernant l'outil d'aide 200, 300, les informations contiennent par exemple les dimensions des alésages 204, 304, les positions des alésages 204, 304, l'angle de rotation du tambour 310, et toutes autres informations permettant d'identifier l'outil d'aide 200, 300 et son orientation.

Dans un mode de réalisation, l'enregistrement de référence inclut également les données relatives aux ondes ultrasonores générées, durée, intensité, direction, etc.

Dans un mode de réalisation, l'enregistrement de référence inclut également le spectre fréquentiel des signaux combinés qui sont relatifs à la zone à surveiller 104 et au défaut connu 204, 304 de l'outil d'aide 200, 300.

Après collage et installation de la sonde 102, la phase d'établissement comprend ainsi :
- une étape de mise en place au cours de laquelle la face de contact d'un outil d'aide 200, 300 est mise en place à un endroit précis sur une face de la pièce 100, où l'outil d'aide 200, 300 comporte un bloc constitué d'un matériau permettant la transmission des ondes ultrasonores dans lequel est noyé un défaut connu 204, 304 et qui comporte une face de contact 203, 303 qui vient en appui contre une face de la pièce 100,
- une étape d'activation au cours de laquelle des ondes ultrasonores 108 sont émises par les émetteurs de la sonde 102, reçues par les capteurs de la sonde 102, et transformées en des signaux combinés par l'unité de contrôle de la sonde 102, et
- une étape d'enregistrement de données, au cours de laquelle, suite à ladite réception, les signaux ainsi combinés sont enregistrés sous forme d'un enregistrement de référence dans une mémoire, par exemple du type clé USB, bases de données, etc.

Au cours de la vie de la pièce 100 et de la sonde 102, des mesures régulières sont effectuées pour vérifier l'état de la zone à surveiller 104 et de la sonde 102.

Ainsi, lors de l'inspection de la pièce 100, des ondes ultrasonores 108 sont émises par les émetteurs de la sonde 102 et reçues par les capteurs de la sonde 102. Les signaux transmis par les capteurs de la sonde 102 sont combinés par l'unité de contrôle. Un spectre fréquentiel des signaux combinés est alors établi par l'unité de contrôle et comparé à un spectre fréquentiel de signaux combinés relatifs à la zone à surveiller 104 de l'enregistrement de référence. Lorsque le spectre fréquentiel est exploité sous forme graphique, la comparaison peut s'effectuer visuellement par un technicien ou informatiquement à l'aide d'un logiciel de comparaison approprié comme par exemple un logiciel de comparaison d'images.

Comme expliqué ci-dessus, le spectre fréquentiel de signaux combinés relatifs à la zone à surveiller 104 de l'enregistrement de référence peut être enregistré tel quel dans la mémoire, ou être calculé au moment de la comparaison à partir des signaux combinés relatifs à la zone à surveiller 104 de l'enregistrement de référence.

Si la comparaison est positive, c'est-à-dire que le spectre fréquentiel des signaux combinés de la présente mesure et le spectre fréquentiel des signaux combinés de l'enregistrement de référence sont identiques ou suffisamment proches pour être considérés comme identiques, alors l'inspection est considérée comme validée avec la sonde 102 toujours correctement collée et calibrée. La sonde 102 peut alors être utilisée pour réaliser un diagnostic de la zone à surveiller 104 afin de vérifier l'absence et/ou la présence et/ou l'évolution d'un défaut structurel de la pièce 100. Selon un mode de réalisation particulier, la comparaison est positive lorsque le spectre fréquentiel des signaux combinés de la présente mesure et le spectre fréquentiel des signaux combinés de l'enregistrement de référence diffèrent de +/- 10% de l'enregistrement de référence.

Si la comparaison est négative, c'est-à-dire que le spectre fréquentiel des signaux combinés de la présente mesure et le spectre fréquentiel des signaux combinés de l'enregistrement de référence sont suffisamment éloignés pour être considérés comme différents (par exemple au-delà de +/- 10%), alors l'inspection est considérée comme non validée. La différence peut alors venir soit d'une évolution de la zone à surveiller, soit d'un décollement ou d'un déréglage de la calibration de la sonde 102.

Dans ce cas, l'outil d'aide 200, 300 qui a servi lors de la phase d'établissement est remis dans la position enregistrée comme étant l'endroit précis d'établissement de l'enregistrement de référence, et les émetteurs de la sonde 102 sont activés selon les données relatives aux ondes ultrasonores générées lors de la phase d'établissement pour générer les mêmes ondes ultrasonores 108 que lors de la phase d'établissement et ces ondes ultrasonores sont reçues par les capteurs de la sonde 102 dont les signaux électriques sont transmis et combinés par l'unité de contrôle. Ces signaux combinés sont alors comparés aux signaux combinés de l'enregistrement de référence relatifs au défaut connu 204, 304.

Si la comparaison est positive, c'est-à-dire que les signaux combinés de la présente mesure et correspondant au défaut connu 204, 304 sont identiques ou suffisamment proches de ceux de l'enregistrement de référence, alors cela confirme que la sonde 102 est toujours suffisamment bien collée et calibrée, mais que les performances de la sonde 102 ont évolué. Selon un mode de réalisation particulier, la comparaison est positive lorsque les signaux combinés de la présente mesure et les signaux combinés de l'enregistrement de référence diffèrent de +/- 10% de l'enregistrement de référence.

Les signaux combinés relatifs à la zone à surveiller 104 et au défaut connu 204, 304 sont alors enregistrés dans l'enregistrement de référence en remplacement des signaux combinés précédents.

Si la comparaison est négative, c'est-à-dire que les signaux combinés et correspondant au défaut connu 204, 304 sont suffisamment éloignés pour être considérés comme différents de ceux de l'enregistrement de référence (par exemple au-delà de +/- 10%), alors cela confirme que la sonde 102 est soit décollée, soit mal calibrée. Dans ce cas la sonde 102 doit être vérifiée et éventuellement remplacée.

Ainsi, au cours de la vie de la sonde 102, un procédé de vérification de la sonde 102 comprend alors :
- une étape de fourniture au cours de laquelle la pièce 100, sur laquelle la sonde 102 est fixée, est fournie,
- une première étape de récupération au cours de laquelle l'enregistrement de référence relatif à la sonde 102 est récupéré à partir de la mémoire où il est enregistré,
- une première étape d'activation au cours de laquelle des ondes ultrasonores 108 sont émises par les émetteurs de la sonde 102, reçues par les capteurs de la sonde 102, et transformées en des signaux combinés par l'unité de contrôle de la sonde 102,
- une première étape de comparaison au cours de laquelle le spectre fréquentiel des signaux ainsi combinés est comparé au spectre fréquentiel de signaux combinés relatifs à la zone à surveiller 104 de l'enregistrement de référence,
   dans le cas où la comparaison est positive, le procédé de vérification s'arrête, et la sonde 102 est donc bien collée et calibrée et peut être utilisée pour réaliser un diagnostic de la pièce 100, dans le cas où la comparaison est négative, le procédé de vérification se poursuit par :
   - une deuxième étape de récupération au cours de laquelle l'outil d'aide 200, 300 comportant un bloc constitué d'un matériau permettant la transmission des ondes ultrasonores dans lequel est noyé un défaut connu 204, 304 et qui comporte une face de contact 203, 303 et dont les informations sont enregistrées dans l'enregistrement de référence, est récupéré,
   - une étape de mise en place au cours de laquelle la face de contact 203,303 de l'outil d'aide 200, 300 ainsi récupéré est mise en place à l'endroit précis d'établissement de l'enregistrement de référence,
   - une deuxième étape d'activation au cours de laquelle des ondes ultrasonores 108 sont émises par les émetteurs de la sonde 102, reçues par les capteurs de la sonde 102, et transformées en des signaux combinés par l'unité de contrôle de la sonde 102, et
   - une deuxième étape de comparaison au cours de laquelle les signaux ainsi combinés sont comparés aux signaux combinés relatifs au défaut connu 204, 304 de l'enregistrement de référence,
      dans le cas où la comparaison est positive, le procédé de vérification se poursuit par une étape d'enregistrement au cours de laquelle les signaux ainsi combinés sont enregistrés dans l'enregistrement de référence,
      dans le cas où la comparaison est négative, le procédé de vérification se poursuit par une étape de maintenance, au cours de laquelle la sonde 102 subit des opérations de maintenance, telles qu'un recollage et/ou un remplacement.

La figure 6 illustre schématiquement un exemple d'architecture matérielle de l'unité de contrôle 600 de la sonde 120.

L'unité de contrôle 600 comprend alors, reliés par un bus de communication 610 : un processeur ou CPU (« Central Processing Unit » en anglais) 601 ; une mémoire vive RAM (« Random Access Memory » en anglais) 602 ; une mémoire morte ROM (« Read Only Memory » en anglais) 603 ; une unité de stockage 604 ; un ensemble d'interfaces 605 permettant à l'unité de contrôle 600 de communiquer avec les émetteurs, les capteurs et les éléments extérieurs tels que l'écran 110.

Le processeur 601 est capable d'exécuter des instructions chargées dans la RAM 602 à partir de la ROM 603. Lorsque la sonde 102 est mise sous tension, le processeur 601 est capable de lire de la RAM 602 des instructions et de les exécuter. Ces instructions forment un programme d'ordinateur causant la mise en oeuvre, par le processeur 601, de tout ou partie des algorithmes et étapes décrits ci-dessus.

Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Procédé de vérification d'une sonde ultrasons (102) comprenant :
- une étape de fourniture au cours de laquelle une pièce (100) présentant une zone à surveiller (104) et sur laquelle la sonde (102) est fixée, est fournie,
- une première étape de récupération au cours de laquelle un enregistrement de référence relatif à la sonde (102) est récupéré à partir d'une mémoire où il est enregistré,
- une première étape d'activation au cours de laquelle des ondes ultrasonores (108) sont émises par au moins un émetteur de la sonde (102), reçues par au moins un capteur de la sonde (102), et transformées en des signaux combinés par une unité de contrôle de la sonde (102),
- une première étape de comparaison au cours de laquelle un spectre fréquentiel des signaux ainsi combinés est comparé à un spectre fréquentiel de signaux combinés relatifs à la zone à surveiller (104) de l'enregistrement de référence,
dans le cas où la comparaison est positive, le procédé de vérification s'arrête,
la comparaison étant considérée positive lorsque le spectre fréquentiel des signaux combinés de la présente mesure et le spectre fréquentiel des signaux combinés de l'enregistrement de référence diffèrent au plus de +/- X% de l'enregistrement de référence, X étant un nombre compris dans l'intervalle [2 ; 15], en particulier égal à 10,
dans le cas où la comparaison est négative, le procédé de vérification se poursuit par :
- une deuxième étape de récupération au cours de laquelle un outil d'aide (200, 300) comportant un bloc constitué d'un matériau permettant la transmission des ondes ultrasonores dans lequel est noyé un défaut connu (204, 304) et qui comporte une face de contact (203, 303) et dont les informations sont enregistrées dans l'enregistrement de référence, est récupéré,
- une étape de mise en place au cours de laquelle la face de contact (203, 303) de l'outil d'aide (200, 300) ainsi récupéré est mise en place à un endroit précis d'établissement de l'enregistrement de référence,
- une deuxième étape d'activation au cours de laquelle des ondes ultrasonores (108) sont émises par l'au moins un émetteur de la sonde (102), reçues par l'au moins un capteur de la sonde (102), et transformées en des signaux combinés par l'unité de contrôle de la sonde (102), et
- une deuxième étape de comparaison au cours de laquelle les signaux ainsi combinés sont comparés à des signaux combinés relatifs au défaut connu (204, 304) de l'enregistrement de référence,
dans le cas où la comparaison est positive, le procédé de vérification se poursuit par une étape d'enregistrement au cours de laquelle les signaux ainsi combinés sont enregistrés dans l'enregistrement de référence,
la comparaison étant considérée positive lorsque les signaux combinés de la présente mesure et les signaux combinés de l'enregistrement de référence diffèrent au plus de +/- Y% de l'enregistrement de référence, Y étant un nombre compris dans l'intervalle [2 ; 15], en particulier égal à 10,
dans le cas où la comparaison est négative, le procédé de vérification se poursuit par une étape de maintenance, au cours de laquelle la sonde (102) subit des opérations de maintenance.

2. Procédé de vérification selon la revendication 1, **caractérisé en ce qu'**il comporte une phase d'établissement d'une référence après l'installation de la sonde (102) sur la pièce (100), et **en ce que** la phase d'établissement comprend :
- une étape de mise en place au cours de laquelle une face de contact (203, 303) d'un outil d'aide (200, 300) comportant un bloc constitué d'un matériau permettant la transmission des ondes ultrasonores dans lequel est noyé un défaut connu (204, 304) est mise en place à un endroit précis sur une face de la pièce (100),
- une étape d'activation au cours de laquelle des ondes ultrasonores (108) sont émises par l'au moins un émetteur de la sonde (102), reçues par l'au moins un capteur de la sonde (102), et transformées en des signaux combinés par l'unité de contrôle de la sonde (102), et
- une étape d'enregistrement de données, au cours de laquelle, les signaux ainsi combinés sont enregistrés sous forme d'un enregistrement de référence dans une mémoire.

## Patentansprüche

1. Verfahren zur Überprüfung einer Ultraschallsonde (102), das enthält:
- einen Bereitstellungsschritt, während dessen ein Bauteil (100) mit einem zu überwachenden Bereich (104) und an dem die Sonde (102) befestigt ist, bereitgestellt wird,
- einen ersten Wiedergewinnungsschritt, während dessen eine die Sonde (102) betreffende Bezugsaufzeichnung ausgehend von einem Speicher wiedergewonnen wird, in dem sie aufgezeichnet ist,
- einen ersten Aktivierungsschritt, während dessen Ultraschallwellen (108) von mindestens einem Emitter der Sonde (102) emittiert, von mindestens einem Sensor der Sonde (102) empfangen und von einer Steuereinheit der Sonde (102) in kombinierte Signale umgewandelt werden,
- einen ersten Vergleichsschritt, während dessen ein Frequenzspektrum der so kombinierten Signale mit einem Frequenzspektrum von kombinierten Signalen betreffend den zu überwachenden Bereich (104) der Bezugsaufzeichnung verglichen wird,
wenn der Vergleich positiv ist, stoppt das Überprüfungsverfahren,
wobei der Vergleich als positiv angesehen wird, wenn das Frequenzspektrum der kombinierten Signale der vorliegenden Messung und das Frequenzspektrum der kombinierten Signale der Bezugsaufzeichnung sich höchstens um +/- X% der Bezugsaufzeichnung unterscheiden, wobei X eine Zahl ist, die im Intervall [2 ; 15] liegt, insbesondere gleich 10 ist,
wenn der Vergleich negativ ist, wird das Überprüfungsverfahren fortgesetzt durch:
- einen zweiten Wiedergewinnungsschritt, während dessen ein Hilfswerkzeug (200, 300) wiedergewonnen wird, das einen Block aufweist, der aus einem die Übertragung der Ultraschallwellen erlaubenden Material besteht, in das ein bekannter Fehler eingebettet ist (204, 304), und das eine Kontaktseite (203, 303) aufweist und dessen Informationen in der Bezugsaufzeichnung aufgezeichnet sind,
- einen Schritt der Einsetzung, während dessen die Kontaktseite (203, 303) des so wiedergewonnenen Hilfswerkzeugs (200, 300) an einer präzisen Stelle zur Erstellung der Bezugsaufzeichnung eingesetzt wird,
- einen zweiten Aktivierungsschritt, während dessen Ultraschallwellen (108) von dem mindestens einem Emitter der Sonde (102) emittiert, von dem mindestens einem Sensor der Sonde (102) empfangen und von der Kontrolleinheit der Sonde (102) in kombinierte Signale umgewandelt werden, und
- einen zweiten Vergleichsschritt, während dessen die so kombinierten Signale mit kombinierten Signalen betreffend den bekannten Fehler (204, 304) der Bezugsaufzeichnung verglichen werden,
wenn der Vergleich positiv ist, wird das Überprüfungsverfahren durch einen Aufzeichnungsschritt fortgesetzt, während dessen die so kombinierten Signale in der Bezugsaufzeichnung aufgezeichnet werden,
wobei der Vergleich als positiv angesehen wird, wenn die kombinierten Signale der vorliegenden Messung und die kombinierten Signale der Bezugsaufzeichnung sich höchstens um +/- Y% der Bezugsaufzeichnung unterscheiden, wobei Y eine Zahl ist, die im Intervall [2; 15] liegt, insbesondere gleich 10 ist,
wenn der Vergleich negativ ist, wird das Überprüfungsverfahren durch einen Wartungsschritt fortgesetzt, während dessen die Sonde (102) Wartungsvorgängen unterzogen wird.

2. Überprüfungsverfahren nach Anspruch 1, **dadurch gekennzeichnet, dass** es eine Phase der Erstellung eines Bezugs nach der Installierung der Sonde (102) auf dem Bauteil (100) aufweist, und dass die Erstellungsphase enthält:
- einen Schritt des Einsetzens, während dessen eine Kontaktseite (203, 303) eines Hilfswerkzeugs (200, 300), das einen Block aufweist, der aus einem die Übertragung der Ultraschallwellen erlaubenden Material besteht, in das ein bekannter Fehler eingebettet ist (204, 304), an einer präzisen Stelle auf einer Seite des Bauteils (100) eingesetzt wird,
- einen Aktivierungsschritt, während dessen Ultraschallwellen (108) von dem mindestens einem Emitter der Sonde (102) emittiert, von dem mindestens einen Sensor der Sonde (102) empfangen und von der Kontrolleinheit der Sonde (102) in kombinierte Signale umgewandelt werden, und
- einen Datenaufzeichnungsschritt, während dessen die so kombinierten Signale in Form einer Bezugsaufzeichnung in einem Speicher aufgezeichnet werden.

## Claims

1. Method for checking an ultrasound probe (102), comprising:
- a provision step in which a part (100) having a region to be monitored (104) and to which the probe (102) is attached is provided,
- a first retrieval step in which a reference recording relating to the probe (102) is retrieved from a memory in which it is stored,
- a first activation step in which ultrasound waves (108) are transmitted by at least one transmitter of the probe (102), received by at least one sensor of the probe (102), and transformed into combined signals by a control unit of the probe (102),
- a first comparison step in which a frequency spectrum of the signals thus combined is compared with a frequency spectrum of combined signals relating to the region to be monitored (104) of the reference recording,
if the comparison is positive, the checking method is stopped,
the comparison being deemed positive when the frequency spectrum of the combined signals of the present measurement and the frequency spectrum of the combined signals of the reference recording differ at most by +/X% with respect to the reference recording, X being a number within the range [2; 15], in particular equal to 10,
if the comparison is negative, the checking method continues with:
- a second retrieval step in which a tool (200, 300) comprising a block consisting of a material that allows the transmission of the ultrasound waves in which a known defect (204, 304) is embedded and which comprises a contact face (203, 303), and the information for which is recorded in the reference recording, is retrieved,
- a placement step in which the contact face (203, 303) of the tool (200, 300) thus retrieved is placed at a precise location for establishing the reference recording,
- a second activation step in which ultrasound waves (108) are transmitted by the at least one transmitter of the probe (102), received by the at least one sensor of the probe (102), and transformed into combined signals by the control unit of the probe (102), and
- a second comparison step in which the signals thus combined are compared with combined signals relating to the known defect (204, 304) of the reference recording, if the comparison is positive, the checking method continues with a recording step in which the signals thus combined are recorded in the reference recording,
the comparison being deemed positive when the combined signals of the present measurement and the combined signals of the reference recording differ at most by +/-Y% with respect to the reference recording, Y being a number within the range [2; 15], in particular equal to 10,
if the comparison is negative, the checking method continues with a maintenance step, in which the probe (102) undergoes maintenance operations.

2. Checking method according to Claim 1, **characterized in that** it comprises a phase of establishing a reference after the installation of the probe (102) on the part (100), and **in that** the establishment phase comprises:
- a placement step in which a contact face (203, 303) of a tool (200, 300) comprising a block consisting of a material that allows the transmission of the ultrasound waves in which a known defect (204, 304) is embedded is placed at a precise location on a face of the part (100),
- an activation step in which ultrasound waves (108) are transmitted by the at least one transmitter of the probe (102), received by the at least one sensor of the probe (102), and transformed into combined signals by the control unit of the probe (102), and
- a data recording step, in which the signals thus combined are stored in the form of a reference recording in a memory.
